Europäisches Patentamt

European Patent Office

Office européen des brevets

(19)

(11) Numéro de publication: **0 296 941**
A1

(12) **DEMANDE DE BREVET EUROPEEN**

(21) Numéro de dépôt: 88401492.9

(22) Date de dépôt: 16.06.88

(51) Int. Cl.⁴: **C 04 B 24/02**
C 04 B 38/10, C 04 B 28/02,
B 01 F 17/00
//(C04B28/02,24:02,24:12,24:16,
24:32)

(30) Priorité: 25.06.87 FR 8708979

(43) Date de publication de la demande:
28.12.88 Bulletin 88/52

(84) Etats contractants désignés:
AT BE CH DE ES GB GR IT LI LU NL SE

(71) Demandeur: **Dion Biro, Guy**
**46 Avenue du Chateau**
**F-94300 Vincennes (FR)**

**De Bona Biro, Renan**
**86, avenue Raymond Poincaré**
**F-75116 Paris (FR)**

(72) Inventeur: **Dion Biro, Guy**
**46 Avenue du Chateau**
**F-94300 Vincennes (FR)**

**De Bona Biro, Renan**
**86, avenue Raymond Poincaré**
**F-75116 Paris (FR)**

(74) Mandataire: **Portal, Gérard et al**
**Cabinet Beau de Loménie 55, rue d'Amsterdam**
**F-75008 Paris (FR)**

Revendications pour les Etats contractants suivants: ES + GR.

(54) **Agent émulseur contenant un alcool gras en C14, procédé de pépration de l'agent émulseur, utilisation de l'agent émulseur en mélange avec un liant hydraulique, procédé de préparation d'un élément de construction expansé ou cellulaire et élément de construction expansé ou cellulaire obtenu.**

(57) L'invention concerne un agent émulseur.

Cet agent émulseur est caractérisé en ce qu'il comprend un alcool gras en $C_{14}$, de préférence un mélange d'alcool gras en $C_{10}$-$C_{16}$ et encore mieux un mélange d'alcool gras à teneur prépondérante en $C_{12}$-$C_{14}$.

Il a été découvert qu'un tel agent émulseur contenant un alcool gras en $C_{14}$ provoque une carbonatation du liant hydraulique tel que le ciment, en améliorant les propriétés mécaniques du produit fini. En outre, cet agent émulseur présente un grand pouvoir moussant, une stabilité améliorée au stockage et aux chocs thermiques.

EP 0 296 941 A1

Bundesdruckerei Berlin

## Description

**Agent émulseur contenant un alcool gras en C$_{14}$, procédé de préparation de l'agent émulseur, utilisation de l'agent émulseur en mélange avec un liant hydraulique, procédé de préparation d'un élément de construction expansé ou cellulaire et élément de construction expansé ou cellulaire ainsi obtenu.**

La présente invention concerne essentiellement un agent émulseur contenant un alcool gras en C$_{14}$, un procédé de préparation de l'agent émulseur, l'utilisation de l'agent émulseur en mélange avec un liant hydraulique, un procédé de préparation d'un élément de construction expansé ou cellulaire et un élément de construction expansé ou cellulaire ainsi obtenu.

L'utilisation d'un agent émulseur pour la fabrication d'éléments de construction expansés ou cellulaires est bien connue dans la technique du bâtiment, notamment pour préparer des bétons cellulaires, des mortiers cellulaires.

Par exemple, le document FR-A-2 503 617 décrit un procédé d'obtention de mortiers cellulaires dans lequel un émulseur est utilisé, mais aucun exemple d'émulseur particulier n'est décrit.

De même, le document EP-A-0 121 633 décrit un procédé de réalisation d'un mortier cellulaire, ainsi qu'un émulseur polyvalent pour cette réalisation. Cet émulseur présente la composition suivante :

- urée : 10 %
- CH$_3$-(CH$_2$)$_{10}$-CH$_2$-O-S$\overline{O}_3$.H$\overset{+}{N}$(CH$_2$-CH$_2$-OH)$_3$ : 45%
- C$_2$H$_5$-O-CH$_2$-CH$_2$-O-CH$_2$-CH$_2$-OH : 10 %
- alcool isobutylique : 10 %
- un amide de formule : R-CONH-CH$_2$-CH$_2$-OH : 3 %
R étant un alkyle d'acide gras en C$_{12/14}$
- eau, le solde soit 22 %

Cet agent émulseur est préparé d'une manière parfaitement homogène par un mélange de divers composants sous agitation à une température de 54 à 57°C, cette température étant maintenue pendant 47 à 49 h.

Cet émulseur ainsi préparé est ensuite mis en solution aqueuse à raison de 30 g d'émulseur pour 2,2 l d'eau (p. 2, lignes 23, 24), que l'on amène ensuite à un volume de 57 l dans l'exemple décrit, pour former 57 l de mousse à ajouter ensuite dans un mélange de 20 kg de ciment à prise lente et de 7l d'eau préalablement préparé dans une bétonnière afin de réaliser un mortier cellulaire léger et résistant permettant d'obtenir au moulage des effets de peau donnant au produit final l'aspect de la pierre de taille aussi bien que des surfaces lisses (voir p. 2, lignes 9 à 34).

Des billes de polyuréthanne expansé ou analogues peuvent être ajoutées pour améliorer les performances de ce mortier, sans modification des caractéristiques mécaniques (p. 2, ligne 35 à p. 3, ligne 5).

Par ailleurs, on connaît également l'emploi de protéines, notamment naturelles, comme agents émulseurs. Par exemple, le document FR-A-2 374 271 décrit l'addition de sang ou d'un extrait de sang animal, notamment sous forme séchée, comme émulseur pour la préparation de ciment, mortier et béton.

Tous ces agents émulseurs antérieurs présentent les inconvénients majeurs suivants :

a) leur pouvoir moussant est relativement faible, ce qui exige l'addition d'une quantité d'émulseur relativement importante, qui conduit par la suite à une quantité d'agent tensioactif très gênante pour la stabilité du produit fini, d'où la difficulté de diminuer et de stabiliser la teneur résiduelle de l'eau, cela après cristallisation des 10 % classiques que contient le liant hydraulique, comme le béton.

b) Une faible stabilité au stockage, notamment les émulseurs à base protéinique sont pratiquement impossibles à stabiliser en stockage en raison de leurs origines animales. Le produit décrit dans EP-A-0 121 633, lorsqu'il est stocké pendant 6 mois et exposé à des variations de températures même lentes, forme par décantation un précipité nuisible.

c) Une faible stabilité aux chocs thermiques. Notamment, l'émulseur décrit dans EP-A-0 121 633, lorsqu'il est soumis à des chocs thermiques de +2°C à 20°C en alternance de 12 h, aboutit à la décantation d'un précipité nuisible.

d) Une fourchette étroite de mélange de la "mousse obtenue" avec l'émulseur, avec les différents ingrédients de sorte qu'il est pratiquement impossible de faire varier la densité du produit fini en obtenant alors un produit fini de valeur isolante et porteur tout à fait moyenne.

e) Un temps de démoulage relativement élevé. Par exemple, avec l'émulseur décrit dans EP-A-0 121 633, il faut, à 20°C, une attente de 10 à 12 h dans le moule pour que le produit soit autoportant et puisse ainsi être démoulé. Ce temps très long implique des investissements lourds dans le nombre des moules nécessaires et dans leur très lente rotation qui provoque une mauvaise exploitation industrielle.

La présente invention a donc pour but de résoudre le nouveau problème technique consistant en la fourniture d'un émulseur présentant un grand pouvoir moussant donnant ainsi la possibilité d'être utilisé en solution aqueuse et d'être mélangé à l'eau dans une fourchette aussi faible que 4 à 7%, en étant présent ainsi en quantités résiduelles très faibles après cristallisation, suite à la polymérisation du produit fini.

La présente invention a encore pour but de résoudre le nouveau problème technique consistant en la fourniture d'un agent émulseur ayant une stabilité au stockage améliorée de manière significative.

La présente invention a encore pour but de résoudre le nouveau problème technique consistant en la fourniture d'un agent émulseur ayant une stabilité améliorée aux chocs thermiques, de manière significative.

La présente invention a encore pour but de résoudre le nouveau problème technique consistant en la fourniture d'un agent émulseur capable de préparer des produits de densité variable dans de larges limites, par exemple entre 0,15 et 1,2 ou même 1,5.

La présente invention a encore pour but de résoudre le nouveau problème technique consistant en la fourniture d'un émulseur capable d'accélérer la réaction de polymérisation de telle sorte que le produit soit autoportant et puisse être démoulé après seulement 3 à 4 h de séjour dans le moule.

Tous ces nouveaux problèmes techniques sont résolus pour la première fois de manière satisfaisante par la présente invention, en la rendant applicable au stade industriel.

Ainsi, selon un premier aspect, la présente invention fournit un agent émulseur, caractérisé en ce qu'il comprend un alcool gras en $C_{14}$ (c'est-à-dire dont la chaîne carbonée contient 14 atomes de carbone).

Selon un mode de réalisation avantageux, cet agent émulseur est caractérisé en ce qu'il comprend un mélange d'alcool gras en $C_{10}$-$C_{16}$, de préférence ce mélange d'alcool gras est à teneur prépondérante en $C_{12}$-$C_{14}$. Encore de préférence, la proportion relative dans le mélange d'alcool gras de l'alcool gras en $C_{12}$ est de 67-71 %, la teneur en alcool gras en $C_{14}$ est de 24-30 %.

Selon un mode de réalisation actuellement préféré, l'agent émulseur est caractérisé en ce qu'il comprend un mélange de deux composants principaux A et B préparés séparément :

Composant A :
- urée : environ 10 %
- $CH_3$-$(CH_2)_{10}$-$CH_2$-O-$\overline{SO}_3$.$H\overset{+}{N}(CH_2$-$CH_2$-OH$)_3$ : environ 42 %
- $C_2H_5$-O-$CH_2$-$CH_2$-O-$CH_2$-$CH_2$-OH : environ 10 %
- alcool isobutylique : environ 7 %
- amide R-CONH-$CH_2$-$CH_2$-OH : environ 3 %
dans l'amide, R est un alkyle d'acide gras en $C_{12/14}$
- eau : solde à 100 % du mélange de A et B.
Composant B :
- alcool gras en $C_{14}$ ou mélange d'alcool gras en $C_{10}$-$C_{16}$ : 2,5 à 3,5 %
- alcool isobutylique : environ 3 %.

Dans la présente description, tous les pourcentages sont donnés en poids, sauf indication contraire.

Selon un deuxième aspect, l'invention couvre également un procédé de préparation de l'agent émulseur tel que ci-dessus défini qui consiste tout d'abord à préparer le composant A par mélange des divers constituants, de préférence l'eau utilisée étant soit déminéralisée, soit oxydée abondamment à l'air de façon à neutraliser les effets de certains produits d'épuration tels que le chlore et autres substances chimiques nuisibles à la conservation (croupissement) et à la formation de la mousse.

Pour réaliser le mélange A, ce mélange est réalisé dans un récipient muni de moyens d'agitation du type "vortex-laminaire" à une température qui ne sera jamais inférieure à 15°C et qui sera en général comprise entre 15°C et 30°C.

Après homogénéisation du mélange A, le mélange B qui a été préparé séparément par addition de l'alcool isobutylique dans le mélange d'alcool gras est ajouté au mélange A, en respectant le même domaine de température de mélange, et on maintient l'agitation au total pendant 4 h.

Selon un troisième aspect, la présente invention concerne également l'utilisation de l'agent émulseur tel que précédemment défini en mélange avec un liant hydraulique pour la réalisation d'éléments de construction expansés ou cellulaires, tels qu'éléments d'isolation thermique ou phonique, ou éléments porteurs.

Pour ce faire, de préférence l'agent émulseur selon l'invention est utilisé à la proportion de 4 à 7 %o par rapport à l'eau de moussage qui sera utilisée pour la formation de mousse à ajouter au liant hydraulique ou à la composition le contenant, additionné alors pour provoquer son expanson ou moussage et ainsi préparer l'élément de construction ou produit fini analogue.

Selon un quatrième aspect, la présente invention couvre également un procédé de préparation d'un élément de construction expansé ou cellulaire à l'aide d'un liant hydraulique, caractérisé en ce qu'on utilise un agent émulseur tel que précédemment défini et qui comprend la formation séparée de mousse en utilisant une proportion de 4 à 7 %o de l'agent émulseur par rapport à l'eau utilisée pour la formation de la mousse.

Enfin, selon un cinquième aspect, la présente invention couvre encore l'élément de construction expansé ou cellulaire, caractérisé en ce qu'il a été préparé par l'emploi d'un agent émulseur tel que précédemment défini.

Grâce à cet agent émulseur selon l'invention, l'agent émulseur présente un grand pouvoir moussant, une stabilité au stockage améliorée, une stabilité aux chocs thermiques améliorée, par rapport aux agents émulseurs antérieurement connus. En outre, et également de manière totalement inattendue, l'agent émulseur selon l'invention augmente radicalement la cinétique de polymérisation du liant hydraulique en permettant l'obtention de produits autoportants, et donc démoulables au bout de 3 à 4 h, au lieu de 12 h auparavant, ce qui semble dû à un phénomène de carbonatation, sans limitation à cet effet de carbonatation.

En outre, l'agent émulseur selon l'invention permet de pouvoir obtenir des densités variables suivant l'utilisation souhaitée allant de 0,15 à 1,2, voire 1,5.

D'autres buts, caractéristiques et avantages de l'invention apparaîtront clairement à l'homme du métier à partir des exemples illustratifs ci-après qui ne sauraient en aucune façon limiter la portée de l'invention.

Exemple 1 selon l'invention

Préparation d'un béton expansé, sans charge.

Pour la préparation de 1 m³ de produit fini, il faut utiliser la composition suivante :
- ciment : 558 kg

- eau : 223,2 kg
- mousse pour l'expansion : eau 89,7 kg + émulseur selon l'invention : 0,627 kg.

Cet agent émulseur selon l'invention a la composition suivante :

Composant A :
- urée : 10 %
- $CH_3-(CH_2)_{10}-CH_2-O-S\overline{O}_3.H\overset{+}{N}(CH_2-CH_2-OH)_3$ : 42%
- $C_2H_5-O-CH_2-CH_2-O-CH_2-CH_2-OH$ : 10 %
- alcool isobutylique : 7 %
- amide $R-CONH-CH_2-CH_2-OH$ : 3 %

dans cet amide, R est un alkyle d'acide gras en $C_{12/14}$ (par exemple commercialisé sous la dénomination Camperlan)
- eau : 22 %

Composant B :
- alcool isobutylique : 3 %
- mélange d'alcool gras en $C_{10}$-$C_{16}$ aux proportions relatives suivantes :
- alcool gras en $C_{10}$ : inférieur à 2
- alcool gras en $C_{12}$ : 67-71
- alcool gras en $C_{14}$ : 24-30
- alcool gras en $C_{16}$ : inférieur à 2.

Avantageusement, ce mélange d'alcool gras présente un indice d'hydroxyle (mgKOH/g) compris entre 290 et 293, un indice de saponification (mgKOH/g) inférieur à 1, un indice d'acide (mgKOH/g) inférieur à 0,1, un indice d'iode (gl2/100 g) inférieur à 0,5, une teneur en eau inférieure à 0,1, une proportion d'hydrocarbure également ou inférieure à 1. Il se présente sous un aspect liquide à solide avec une zone de solidification comprise entre 17 et 23°C, une densité à 30°C en g/cm³ = 0,82 et un poids moléculaire moyen de 194.

La préparation du produit fini, ici du béton, a lieu de la manière suivante :

Tout d'abord, on prépare séparément les composants A et B de l'agent émulseur par mélange dans des récipients distincts à une température comprise entre 15°C et 30°C maximum, de préférence sous une agitation du type "vortex-laminaire".

Une fois que l'on obtient des solutions homogènes du composant A et du composant B, on ajoute le composant B dans le composant A en maintenant la température entre 15°C et 30°C maximum, et une agitation du type "vortex-laminaire" pendant 4 h.

On obtient ainsi les 0,627 kg de l'agent émulseur recherché.

Cet agent émulseur peut être stocké sans aucun problème, il présente un excellent pouvoir moussant, une stabilité au stockage très améliorée, sans formation de précipité, même après 6 mois de stockage tout en ayant été exposé à des variations de température. Il présente également une excellente résistance aux chocs thermiques en ne formant pas de précipité après avoir été soumis à des chocs thermiques entre +2°C et 20°C en alternance pendant 12 h.

Cet agent émulseur est ensuite ajouté aux 89,7 kg d'eau, qui est de préférence de l'eau déminéralisée ou oxydée abondamment à l'air de façon à neutraliser les effets de certains produits d'épuration tels que le chlore et autres substances chimiques nuisibles à la conservation (croupissement) et à la formation de la mousse.

Par ailleurs, on mélange dans une bétonnière, par exemple à moyeu extérieur, les 558 kg de ciment et les 223,2 kg d'eau jusqu'à obtention d'une bouillie épaisse puis on y incorpore la mousse qui vient d'être préparée contenant l'agent émulseur selon l'invention.

On observe que le brassage qui a lieu lors du mélange ne détruit pas la mousse selon l'invention qui est parfaitement résistante en n'étant pas cassable par le brassage du mélange, ce qui constitue un résultat particulièrement inattendu pour un homme du métier.

Après 28 jours de polymérisation, on obtient un béton expansé ayant une densité de 0,5.

Dans ce béton ainsi réalisé, après 28 jours de polymérisation, on prélève trois éprouvettes de dimension 100 x 100 x 100 mm³ que l'on soumet à un essai de résistance à la compression et on obtient une valeur de résistance à la compression de 2,0 à 2,7 MPa ou 20 à 27 bar.

Il est à noter qu'avec l'agent émulseur selon l'invention il était possible de démouler le béton après 3 à 4 h seulement de séjour dans le moule à 20°C, ce qui semble dû à un phénomène de carbonatation qui accélère le durcissement du béton expansé ou cellulaire, sans pourtant influencer la loi physique qui impose les 28 jours nécessaires au béton pour lui assurer sa résistance optimum.

Exemple 2 de comparaison

On procède à un essai comparatif en utilisant l'agent émulseur connu par le document EP-A-0 121 633, p. 3 et 4, et qui est constitué par le constituant A selon l'invention modifié.

Ainsi, on procède comme à l'exemple 1, si ce n'est que l'on utilise l'émulseur de comparaison décrit dans EP-A-121 633 p. 3 et 4, et qui présente la composition suivante :
- urée : 10 %
- $CH_3(CH_2)_{10}-CH_2-O-S\overline{O}_3.H\overset{+}{N}(CH_2-CH_2-OH)_3$ : 45%
- $C_2H_5-O-CH_2-CH_2-O-CH_2-CH_2-OH$ : 10 %
- alcool isobutylique : 10 %
- amide $R-CONH-CH_2-CH_2-OH$ : 3 %

dans lequel R est un alkyle d'acide gras en $C_{12/14}$ (par exemple commercialisé sous la dénomination Camperlan)
- eau : 22 %.

On réalise l'agent émulseur par mélange de tous ces composants à une température de 54 à 57°C qui est maintenue pendant 47 à 49 h comme décrit dans EP-A-0 121 633, en quantité nécessaire pour obtenir 0,627 kg d'agent émulseur.

On forme ensuite la mousse comme décrit à l'exemple 1 en mélangeant cet agent émulseur avec 89,7 kg d'eau et la mousse est ensuite introduite dans le mélange préalablement préparé de 558 kg de ciment et de 223,2 kg d'eau.

On observe qu'un démoulage n'est possible qu'après 10 à 12 h, à 20°C.

Après 28 jours, on prélève trois éprouvettes de même dimension que celles décrites à l'exemple 1 pour mesurer la résistance à la compression.

On obtient une résistance à la compression de 1,2 à 1,6 MPa ou 12 à 16 bar, qui est donc très nettement inférieure à la résistance à la compression obtenue avec l'agent émulseur selon l'invention.

La densité obtenue est également de 0,5.

## Exemple 3 selon l'invention

### Béton mélangé avec une charge

Dans cet exemple selon l'invention, on remplace 50 % du ciment par des cendres volantes dont la composition est la suivante :
- $SiO_2$ : 43 à 54 %
- $Al_2O_3$ : 22 à 32 %
- $Fe_2O_3$ : 4 à 15 %
- CaO : 1 à 8 %
- MgO : 1 à 3 %
- $Na_2O$ : 0,5 à 5 %
- $K_2O$ : 1 à 5 %
- $SO_3$ : 0,2 à 2 %
- imbrûlé : 2,5 à 7 %.

On procède comme à l'exemple 1, si ce n'est que l'on a 279 kg de ciment à mélanger avec les 279 kg de cendres volantes et à 334,8 kg d'eau, la quantité d'eau étant augmentée car les cendres absorbent environ 2 fois plus d'eau que le ciment. La mousse utilisée est identique à celle préparée à l'exemple 1.

Après 28 jours de polymérisation, on obtient une densité de 0,480, la densité des cendres étant 25 % plus faible que celle du ciment.

La résistance à la compression à 28 jours est de : 2,2 à 3 MPa ou 22 à 30 Bars.

Nota : Dans cette dernière formulation (démoulage entre 3 et 4 heures), la résistance à la compression sur éprouvettes de 100 x 100 x 100 m/m a une nouvelle valeur = 2,2 à 3 MPa ou 22 à 30 Bars, soit un gain d'environ 10 %.

On fait un essai de résistance à la flamme de la manière suivante :

On prépare deux éprouvettes de dimension 300 x 200 x 100 mm que l'on place sur deux cornières en extrémité en laissant ainsi le centre dans le vide.

On applique alors en plein centre la flamme d'un chalumeau acétylénique, buse n° 150, donnant environ 2 000 à 2 200°C, pendant 4 min.

Dans les 15 à 20 s, l'épaisseur de 100 mm s'est réduite à 95 mm sans que l'éprouvette ne se déforme, en formant une petite cuvette d'un diamètre de 50 mm environ.

Dès la formation de la petite cuvette, un phénomène de vitrification est apparent. Cette zone vitrifiée a été portée au rouge cerise sans modification d'évolution ci-dessus décrite.

Sur les deux éprouvettes, pendant les 4 min d'exposition à la flamme du chalumeau, la partie opposée n'est pas montée sensiblement en température, la main ayant pu y être posée sans brûlure.

Il est ainsi possible d'affirmer que le béton chargé ainsi produit est au moins un pare-flammes, donc MO, stable au feu, présentant une excellente homogénéité, qui semble due à la carbonatation causée par l'agent émulseur selon l'invention.

En effet, si l'on réalise le même test avec un béton obtenu avec l'agent émulseur de l'exemple 2, dans les mêmes conditions, on n'oberve pas ce phénomène de vitrification et la partie opposée monte sensiblement en température, la main ne pouvant pas y être posée sans brûlure de sorte que le béton ainsi obtenu ne peut pas être considéré comme étant un pare-flammes.

On conçoit ainsi que l'invention apporte des avantages techniques très importants, inattendus pour un homme du métier.

Naturellement, l'agent émulseur selon l'invention peut être ajouté à tout type de liant hydraulique, qu'il soit non chargé ou chargé. Par ailleurs, cet agent émulseur peut encore être utilisé pour le dépoussiérage des gaz ou la dépollution atmosphérique notamment.

## Revendications

1. Agent émulseur, caractérisé en ce qu'il comprend un alcool gras en $C_{14}$.

2. Agent émulseur selon la revendication 1, caractérisé en ce qu'il comprend un mélange d'alcool gras en $C_{10}$-$C_{16}$.

3. Agent émulseur selon la revendication 1 ou 2, caractérisé en ce qu'il comprend un mélange d'alcool gras à teneur prépondérante en $C_{12}$-$C_{14}$.

4. Agent émulseur selon la revendication 2 ou 3, caractérisé en ce que le mélange d'alcool gras comprend 67 à 71 % d'alcool gras en $C_{12}$ et 24 à 30 % d'alcool gras en $C_{14}$.

5. Agent émulseur selon l'une des revendications 1 à 4, caractérisé en ce qu'il comprend un mélange de deux composants A et B, préparés séparément :
composant A :
- urée : environ 10 %
- $CH_3(CH_2)_{10}$-$CH_2$-O-$S\overline{O}_3$.$H\overset{+}{N}(CH_2$-$CH_2$-$OH)_3$ : environ 42 %
- $C_2H_5$-O-$CH_2$-$CH_2$-O-$CH_2$-$CH_2$-OH : environ 10 %
- alcool isobutylique : environ 7 %
- amide R-CONH-$CH_2$-$CH_2$-OH : environ 3 % dans l'amide, R est un acide gras en $C_{12/14}$
- eau : solde à 100 % du mélange de A et de B
composant B :
- alcool isobutylique : environ 3 %
- mélange d'alcool gras en $C_{10}$-$C_{16}$ : 2,5 à 3,5 %, de préférence environ 3 %.

6. Procédé de préparation de l'agent émulseur selon la revendication 5, caractérisé en ce qu'on prépare séparément le composant A par mélange de ses constituants à une température comprise entre 15 et 30°C et le composant B par mélange de ses constituants à une température comprise entre 15 et 30°C puis on ajoute le composant B dans le composant A, en maintenant la même température, et en maintenant une agitation pendant 4 h, cette agitation étant de préférence du type "vortex-laminaire".

7. Utilisation de l'agent émulseur tel que défini selon l'une quelconque des revendications 1 à 5 en mélange avec un liant hydraulique pour la réalisation d'éléments de construction expansés ou cellulaires, tels qu'éléments d'isolation thermique ou phonique, ou éléments porteurs.

8. Procédé de préparation d'un élément de construction expansé ou cellulaire à l'aide d'un liant hydraulique, caractérisé en ce qu'on utilise un agent émulseur tel que défini à l'une quelconque des revendications 1 à 5 et qui comprend la formation séparée de mousse en utilisant une proportion de 4 à 7 ‰ de l'agent émulseur par rapport à l'eau utilisée pour la formation de la mousse.

9. Elément de construction expansé ou cellulaire, caractérisé en ce qu'il a été préparé par l'emploi d'un agent émulseur tel que défini à l'une quelconque des revendications 1 à 5.

**Revendications pour les Etats contractants suivants: GR, ES**

1. Procédé de préparation d'un agent émulseur, caractérisé en ce qu'on utilise un alcool gras en $C_{14}$.

2. Procédé selon la revendication 1, caractérisé en ce qu'on utilise un mélange d'alcool gras en $C_{10}$-$C_{16}$.

3. Procédé selon la revendication 1 ou 2, caractérisé en ce qu'on utilise un mélange alcool gras à teneur prépondérante en $C_{12}$-$C_{14}$.

4. Procédé selon la revendication 2 ou 3, caractérisé en ce qu'on réalise et utilse un mélange d'alcool gras comprenant 67 à 71 % d'alcool gras en $C_{12}$ et 24 à 30 % d'alcool gras en $C_{14}$.

5. Procédé selon l'une de revendications 1 ou 4, caractérisé en ce qu'on prépare séparément deux composants A et B, suivants :
composant A :
- urée : environ 10 %
- $CH_3(CH_2)_{10}$-$CH_2$-O-$S\overline{O}_3$-$H\overset{+}{N}(CH_2$-$CH_2$-OH)$_3$ : environ 42 %
- $C_2H_5$-O-$CH_2$-$CH_2$-O-$CH_2$-$CH_2$-OH : environ 10 %
- alcool isobutylique : environ 7 %
- amide R-CONH-$CH_2$-$CH_2$-OH : environ 3 %
dans l'amide, R est un acide gras en $C_{12/14}$
- eau : solde à 100 % du mélange de A et de B
composant B :
- alcool isobutylique : environ 3 %
- mélange d'alcool gras en $C_{10}$-$C_{16}$ : 2,5 à 3,5 %, de préférence environ 3 %
que l'on mélange ensuite.

6. Procédé de préparation de l'agent émulseur selon la revendication 5, caractérisé en ce qu'on prépare séparément le composant A par mélange de ses constituants à une température comprise entre 15 et 30°C et le composant B par mélange de ses constituants à une température comprise entre 15 et 30°C puis on ajoute le composant B dans le composant A en maintenant la même température, et en maintenant une agitation pendant 4 h, cette agitation étant de préférence du type "vortex-laminaire".

7. Utilisation de l'agent émulseur tel que défini selon l'une quelconque des revendications 1 à 5 en mélange avec un liant hydraulique pour la réalisation d'éléments de construction expansés ou cellulaires, tels qu'éléments d'isolation thermique ou phonique, ou éléments porteurs.

8. Procédé de préparation d'un élément de construction expansé ou cellulaire à l'aide d'un liant hydraulique, caractérisé en ce qu'on utilise un agent émulseur tel que défini à l'une quelconque des revendications 1 à 5 et qui comprend la formation séparée de mousse en utilisant une proportion de 4 à 7 ‰ de l'agent émulseur par rapport à l'eau utilisée pour la formation de la mousse.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CHEMICAL ABSTRACTS, vol. 105, no. 22, décembre 1986, page 334, résumé no. 19638p, Columbus, Ohio, US; & SU-A-1 252 322 (I.G. VLASENKO et al.) 23-08-1986 * Résumé * | 1,7,9 | C 04 B 24/02 C 04 B 38/10 C 04 B 28/02 B 01 F 17/00 // (C 04 B 28/02 C 04 B 24:02 |
| Y | IDEM --- | 1-3,5,7 | C 04 B 24:12 C 04 B 24:16 |
| Y,D | EP-A-0 121 633 (G. DION BIRO et al.) * Revendications 1-3 * --- | 1-3,5,7 | C 04 B 24:32 ) |
| P,X | EP-A-0 247 552 (SO.RI.FAR.) * Page 1, colonne de gauche, lignes 18-23,50-54 * --- | 1-3 | |
| A | US-A-3 486 916 (W.A. CORDON) * Revendications 1,3 * --- | 1-3,5,7 | |
| A | FR-A-1 329 281 (K. BRANDT) * Revendications 1,5 * ----- | 1 | |

DOMAINES TECHNIQUES RECHERCHES (Int. Cl.4)

C 04 B 24
C 04 B 28
C 04 B 38
B 01 F 17

Le présent rapport a été établi pour toutes les revendications

| Lieu de la recherche | Date d'achèvement de la recherche | Examinateur |
|---|---|---|
| LA HAYE | 20-09-1988 | DAELEMAN P.C.A. |